# FASCICULE DE BREVET EUROPEEN

(11) **EP 0 784 938 B1**
(45) Date de publication et mention de la délivrance du brevet: **31.10.2001**
(21) Numéro de dépôt: 96200119.4
(22) Date de dépôt: 18.01.1996
(51) Int. Cl.: A23L 1/31, A23L 1/48

(54) **Procédé de préparation d'un plat culinaire congelé**
Verfahren zur Zubereitung eines gefrorenen Nahrungsmittels
Process for the preparation of a frozen meal

(43) Date de publication de la demande: 23.07.1997
(73) Titulaire: SOCIETE DES PRODUITS NESTLE S.A., 1800 Vevey (CH)
(72) Inventeur: Petitfrere, Patrick, F-60000 Allonne (FR); Capron, Alain, F-60112 Troissereux (FR)
(74) Mandataire: Wavre, Claude-Alain

(56) Documents cités:
- EP-A- 0 533 959
- FR-A- 2 602 957

## Description

La présente invention a pour objet un procédé de préparation d'un plat culinaire congelé contenant des morceaux de viande ou de poisson, une sauce, une garniture de légumes entiers et/ou en morceaux, et/ou des céréales, ainsi que le plat culinaire congelé obtenu par ce procédé.

Il est connu de fabriquer des plats culinaires au goût agréable et de préparation rapide pour le consommateur. Généralement un plat culinaire est conditionné dans une barquette en aluminium ou en matière plastique, de manière à lui donner une forme, puis il est congelé ou réfrigéré. Le consommateur le régénère, notamment au four ou aux micro-ondes, dans la barquette ou directement disposé dans un plat à servir. Une fois que le consommateur l'a régénéré et la sorti de la barquette, le plat culinaire s'affaisse, perd sa forme et les différents ingrédients se désolidarisent.

FR 2602957 décrit notamment un procédé de préparation d'un plat culinaire réfrigéré, comprenant une pièce de base, un morceau de viande ou de poisson, enrobée notamment d'une sauce et/ou d'une garniture de légumes en morceaux. Le plat culinaire est conditionné dans une barquette en plastique transparent et le consommateur n'a plus qu'à le régénérer dans une casserole ou au bain-marie ou au four. Lors de la régénération, la sauce et/ou la garniture de légumes se désolidarisent de la pièce de base.

La présente invention a pour but de proposer un procédé de préparation d'un plat culinaire congelé, dans lequel les différents constituants, les morceaux de viande ou de poisson, la sauce, la garniture de légumes entiers et/ou en morceaux et/ou les céréales, ne se désolidarisent pas lors de la régénération au four, aux micro-ondes, en bain de friture ou à la poêle.

A cet effet, dans le procédé de préparation d'un plat culinaire congelé selon la présente invention:
- on prépare un mélange contenant des morceaux de viande ou de poisson, une sauce, une garniture de légumes entiers et/ou en morceaux, et/ou des céréales,
- on effectue à 0-10° C une étape de formage du mélange fractionné en portions,
- on enrobe et l'on pane lesdites portions à température ambiante,
- on les préfrit à 170-200° C pendant 10-60 s,
- puis on les congèle.

On peut préparer un mélange contenant 10-40% de morceaux de viande ou de poisson, 15-35% de sauce, 10-50% de garniture de légumes entiers et/ou en morceaux, et/ou 0-25% de céréales, par exemple.

Ladite viande peut être du boeuf, du poulet, de la dinde, du veau ou du porc, par exemple.
Ledit poisson peut être du cabillaud, du saumon, de la sole ou du Saint-Pierre, par exemple.
On peut précuire la viande ou le poisson et congeler ladite viande ou ledit poisson entier ou en morceaux avant de l'incorporer au mélange, par exemple.
On peut prédécouper la viande ou le poisson en morceaux de taille réduite, notamment en morceaux de 0,5-1,5 cm³, de manière à permettre la cohésion du mélange, par exemple.

Lesdits légumes entiers et/ou en morceaux peuvent être des carottes, des petits pois, du céleri rave, des haricots, des pommes de terre ou des broccolis, par exemple.
On peut blanchir ou précuire les légumes entiers et/ou en morceaux puis les congeler avant de les incorporer au mélange, par exemple.

Lesdites céréales peuvent être du riz ou de la semoule de blé dur, par exemple.
On peut précuire les céréales puis les congeler avant de les incorporer au mélange, de manière à faciliter l'étape de formage, par exemple.

Ladite sauce peut être préparée à température ambiante ou à une température supérieur à la température de gélatinisation des amidons à partir d'eau, de lait, de farine de céréale, notamment de farine de blé, d'amidon, d'amidon modifié, notamment d'amidon modifié de maïs, d'herbes, d'épices, de graisses, de substituts de graisses, d'agents colorants, d'agents aromatisants, de vitamines, d'antioxydants et/ou de sels minéraux, par exemple.
De préférence, ladite sauce présente une teneur en amidon inférieure ou égale à 8,5%. On emploie l'expression "teneur en amidon" pour désigner "la quantité d'amidon et/ou d'amidon modifié incorporée à la sauce".

De préférence, on prépare un mélange contenant des morceaux de viande ou de poisson, une sauce, une garniture de légumes entiers et/ou en morceaux, et/ou des céréales dont la température n'excéde pas 5° C, de manière à augmenter la viscosité finale du mélange.

De préférence, on prépare le mélange à 0-5° C. On peut le préparer dans un pétrin, notamment un mélangeur à ruban ou à pales de type Wolfking® 400, commercialisé par Wolfking, A/S 2 Industiwej, DK 4200 Slagelse.
Lors de cette préparation, on peut ajouter au mélange une fraction d'amidon précuit, de manière à permettre une absorbtion totale de l'eau contenue dans le mélange, par exemple. On choisit dans ce cas le type d'amidon précuit selon la recette du plat culinaire congelé. Si le mélange contient des pommes de terre, on peut ajouter des flocons de pommes de terre, de manière à absorber l'eau contenue dans le mélange et à renforcer sa structure, par exemple. Si le mélange contient du riz, on peut ajouter de l'amidon précuit de riz, de manière à assécher le mélange, par exemple.

De préférence, on effectue une étape de formage à 0-5° C. On peut utiliser une formeuse du type Formax F6, Formax F12, Formax F19 ou Formax F26 commercialisée par Formax, pelikaanweg 1, NL-1118 AA Schiphol ou une formeuse du type Koppens VM 600 HS ou du type Koppens VM 900 commercialisée par Koppens Machinefabriek B.V., Postbus 1, Beekakker 11, NL-5760 AA Bakel, par exemple.
Lors de l'étape de formage, on peut fractionner le mélange en portions de 30-120 g, par exemple. Selon la formeuse et la plaque pour formeuse que l'on utilise, on peut choisir les dimensions et la forme desdites portions, par exemple.

On enrobe et l'on pane lesdites portions à température ambiante. Pour ce faire, on peut utiliser une machine à enrober de type Koppens ER 400, Koppens ER 600 ou Koppens ER 1200 commercialisée par Koppens Machinefabriek B.V., Postbus 1, Beekakker 11, NL-5760 AA Bakel et une machine à paner de type Koppens PR 400, Koppens PR 600 ou Koppens PR 1200 commercialisée par Koppens Machinefabriek B.V., Postbus 1, Beekakker 11, NL-5760 AA Bakel, par exemple. On peut préparer à température ambiante un enrobage contenant 56-64% d'eau, 30-40% de farine, 0-2,9% de lait en poudre écrémé et 1,1-4,5% d'épices qui est versé en continu sur les portions, par exemple. Puis on peut paner chaque portion enrobée avec 8-15% de chapelure, par exemple.

On préfrit donc les portions à 170-200° C pendant 10-60 s, de manière à obtenir des portions de forme définie et à la texture croustillante. Pour ce faire, on peut utiliser une friteuse en continue du type Koppens BR 3000/600 ou BR 7000/1000 commercialisées par Koppens Machinefabriek B.V., Postbus 1, Beekakker 11, NL-5760 AA Bakel, par exemple. On peut effectuer cette préfriture dans de l'huile végétale, notamment dans de l'huile de colza, de l'huile de tournesol ou de l'huile de soja, par exemple.

Enfin, on congèle lesdites portions. Avant de les congeler, on peut les conditionner dans des emballages cartonnés dont la surface intérieure est recouverte d'une couche de paraffine, par exemple.

On peut régénérer le plat culinaire congelé au four, au micro-ondes, à la poêle ou au bain de friture, par exemple. Lors de cette régénération, le plat culinaire ne s'affaisse pas et garde sa forme jusqu'à sa découpe.

La présente invention a également pour objet le plat culinaire congelé obtenu par la mise en oeuvre dudit procédé.

Le procédé ainsi que le produit selon la présente invention sont décrits plus en détails dans les exemples non limitatifs ci-après. Dans ces exemples, les pourcentages et parties sont donnés en poids, sauf indications contraires.

### Exemple 1

On prépare des croquettes de porc à la moutarde.

Pour ce faire, on prépare à température ambiante une sauce contenant 54,4% d'eau, 4,5% de farine haute viscosité, 3,3% d'amidon modifié, 19,3% de moutarde, 8,1% d'épices, 5,1% de lait écrèmé en poudre, 5,1% d'huile de tournesol et 0,2% de vin blanc. Puis l'on ajuste la température de la sauce à 4° C.

On prépare de la viande de porc en morceaux de 1cm³ que l'on précuit puis que l'on congèle.

On prépare une garniture de légumes contenant 52,7% de pommes de terre coupées en rondelles préfrites de 5 mm d'épaisseur, 40,6% d'oignons rissolés, 6,4% de graines de moutarde et 0,3% de feuilles d'estragon. Puis l'on congèle la garniture de légumes avant de préparer le mélange.

On mélange à 4° C, 29,3% de la sauce, 30% de morceaux de viande de porc et 35,7% de garniture de légumes dans un mélangeur à ruban de type Wolfking® 400. Lors de cette préparation, on ajoute au mélange 1% d'amidon modifié instantané et 4% de flocons de pommes de terre.

On effectue une étape de formage à 4° C à l'aide d'une formeuse de type F6 Formax. Lors de cette étape, on fractionne le mélange en portions de 45 g de forme rectangulaire.

On enrobe et l'on panne à température ambiante les portions ainsi formées à l'aide d'une machine à enrober de type Koppens ER 400 et une machine à paner de type Koppens PR 400. Pour ce faire, on prépare à température ambiante un enrobage contenant 56,6% d'eau, 40% de farine, 0,7% de lait écrémé en poudre et 2,7% d'épices. L'enrobage est versé en continu sur les portions placées sur le tapis et le trop-plein est recyclé. Après l'enrobage, on pane chaque portion avec 10% de chapelure.

On obtient ainsi des portions de 58 g que l'on préfrit à 180° C pendant 40 s dans de l'huile de tournesol à l'aide d'une friteuse en continu de type Koppens BR 3000/600.

Les portions individuelles sont ensuite conditionnées dans des emballages cartonnés dont la surface intérieure est recouverte d'une couche de paraffine puis elles sont congelées à -18° C.

Le consommateur peut disposer ainsi le plat culinaire dans un plat et le régénérer en bain de friture pendant 5 min sans qu'il s'affaisse. Le plat culinaire régénéré garde sa forme initiale jusqu'à sa découpe.

### Exemple 2

On prépare un plat de volaille aux saveurs orientales.

Pour ce faire, on prépare à température ambiante une sauce contenant 70,5% d'eau, 6% d'amidon de maïs modifié, 4% de farine de blé haute viscosité, 10% de concentré de tomates, 3% d'extrait de viande en pâte et 6,5% d'épices. Puis l'on ajuste la température de la sauce à 4° C.

On précuit de la viande de dinde en boyau, on la découpe en dés de 1 cm³ , puis on la congèle.

On prépare une garniture de légumes contenant de 50% de carottes, coupées en rondelles et blanchies, et 50% d'épinards en branche blanchies. Puis l'on ajuste la température de la garniture de légumes à 4° C.

On précuit du riz que l'on congèle ensuite

On mélange à 4° C, 24% de sauce, 23% de dés de viande de dinde, 24,5% de garniture de légumes et 24,5% de riz dans un mélangeur à ruban de type Wolfking® 400. Lors de cette préparation, on ajoute au mélange 1,5% d'amidon modifié instantané et 1,5% de flocons de pommes de terre.

On effectue une étape de formage à 4° C à l'aide d'une formeuse de type F6 Formax. Lors de cette étape, on fractionne le mélange en portions de 45 g de forme rectangulaire.

On enrobe et l'on panne à température ambiante les portions ainsi formées à l'aide d'une machine à enrober de type Koppens ER 400 et une machine à paner de type Koppens PR 400. Pour ce faire, on prépare à température ambiante un enrobage contenant 63,9% d'eau, 30% de farine, 5% d'amidon de maïs modifié et 1,1% d'épices. L'enrobage est versé en continu sur les portions placées sur le tapis et le trop-plein est recyclé. Après l'enrobage, on pane chaque portion avec 10% de chapelure.

On obtient ainsi des portions de 58 g que l'on préfrit à 180° C pendant 40 s dans de l'huile de tournesol à l'aide d'une friteuse en continu de type Koppens BR 3000/600.

Les portions individuelles sont ensuite conditionnées dans des emballages cartonnés dont la surface intérieure est recouverte d'une couche de paraffine puis elles sont congelées à -18° C.

Le consommateur peut disposer ainsi le plat culinaire dans un plat et le régénérer au micro-ondes sans qu'il s'affaisse. Le plat culinaire régénéré garde sa forme initiale jusqu'à sa découpe.

## Revendications

1. Procédé de préparation d'un plat culinaire congelé, dans lequel:
- on prépare un mélange contenant des morceaux de viande ou de poisson, une sauce, une garniture de légumes entiers et/ou en morceaux, et/ou des céréales,
- on effectue à 0-10° C une étape de formage du mélange fractionné en portions,
- on enrobe et l'on pane lesdites portions à température ambiante,
- on les préfrit à 170-200° C pendant 10-60 s,
- puis on les congèle.

2. Procédé selon la revendication 1, dans lequel on prépare un mélange contenant 10-40% de morceaux de viande ou de poisson, 15-35% de sauce, 10-50% de garniture de légumes entiers et/ou en morceaux, et/ou 0-25% de céréales.

3. Procédé selon la revendication 1, dans lequel on prépare un mélange contenant des morceaux de viande ou de poisson, une sauce, une garniture de légumes entiers et/ou en morceaux, et/ou des céréales dont la température n'excéde pas 5° C.

4. Procédé selon la revendication 1, dans lequel on blanchit ou l'on précuit des légumes entiers et/ou en morceaux et/ou des céréales puis on les congèle avant de les incorporer au mélange.

5. Procédé selon la revendication 1, dans lequel la sauce présente une teneur en amidon inférieure ou égale à 8,5%.

6. Procédé selon la revendication 1, dans lequel on prépare un mélange et on effectue l'étape de formage à 0-5° C.

7. Procédé selon la revendication 1, dans lequel on fractionne le mélange en portions de 30-120 g lors de l'étape de formage.

8. Plat culinaire congelé obtenu selon l'une des revendications 1 à 7.

## Patentansprüche

1. Verfahren zur Herstellung eines tiefgefrorenen Gerichts, bei dem man:
- eine Mischung herstellt, die Fleisch- oder Fischstücke, eine Sauce, eine Beilage aus ganzem Gemüse und/oder Gemüsestücken und/oder Getreide enthält,
- bei 0-10°C einen Schritt der Formung der in Portionen geteilten Mischung durchführt,
- die Portionen bei Raumtemperatur umhüllt und paniert,
- sie 10-60 s bei 170-200°C vorfritiert
- und sie dann tiefgefriert.

2. Verfahren nach Anspruch 1, bei dem man eine Mischung herstellt, die 10-40% Fleisch- oder Fischstücke, 15-35% Sauce, 10-50% Beilage aus ganzem Gemüse und/oder Gemüsestücken und/oder 0-25% Getreide enthält.

3. Verfahren nach Anspruch 1, bei dem man eine Mischung herstellt, die Fleisch- oder Fischstücke, eine Sauce, eine Beilage aus ganzem Gemüse und/oder Gemüsestücken und/oder Getreide enthält und deren Temperatur 5°C nicht überschreitet.

4. Verfahren nach Anspruch 1, bei dem man ganzes Gemüse und/oder Gemüsestücke und/oder Getreide blanchiert und dann tiefgefriert, bevor man sie in die Mischung einarbeitet.

5. Verfahren nach Anspruch 1, bei dem die Sauce einen Stärkegehalt von weniger als oder gleich 8,5% aufweist.

6. Verfahren nach Anspruch 1, bei dem die Herstellung einer Mischung und der Formungsschritt bei 0-5°C stattfinden.

7. Verfahren nach Anspruch 1, bei dem man die Mischung im Formungsschritt in Portionen von 30-120 g teilt.

8. Tiefgefrorenes Gericht nach einem der Ansprüche 1 bis 7.

## Claims

1. Process for preparing a frozen culinary dish, wherein:
- a mixture is prepared containing pieces of meat or fish, a sauce, a garnish of vegetables which are whole and/or in pieces, and/or cereals,
- a step of forming the mixture divided up into portions is carried out at 0-10°C,
- the said portions are coated and covered with breadcrumbs at ambient temperature,
- they are prefried at 170-200°C for 10-60 s,
- they are then frozen.

2. Process according to claim 1, wherein a mixture is prepared containing 10-40 % pieces of meat or fish, 15-35 % sauce, 10-50 % of a garnish of vegetables which are whole and/or in pieces, and/or 0-25 % cereals.

3. Process according to claim 1, wherein a mixture is prepared containing pieces of meat or fish, sauce, a garnish of vegetables which are whole and/or in pieces, and/or cereals of which the temperature does not exceed 5°C.

4. Process according to claim 1, wherein vegetables which are whole and/or in pieces, and/or cereals are blanched or precooked and are then frozen before being incorporated in the mixture.

5. Process according to claim 1, wherein the sauce has a starch content of less than or equal to 8.5 %.

6. Process according to claim 1, wherein a mixture is prepared and the forming step is carried out at 0-5°C.

7. Process according to claim 1, wherein the mixture is divided up into 30-120 g portions during the forming step.

8. Frozen culinary dish obtained according to one of claims 1 to 7.
